# EUROPÄISCHE PATENTSCHRIFT

(11) **EP 2 960 387 B1**
(45) Veröffentlichungstag und Bekanntmachung des Hinweises auf die Patenterteilung: **25.10.2017**
(21) Anmeldenummer: 14174772.5
(22) Anmeldetag: 27.06.2014
(51) Int. Cl.: E03F 3/04, F16L 25/00

(54) **Rohr-Verbindungs-Bausatz**
Pipe connection kit
Kit de liaison de tuyau

(43) Veröffentlichungstag der Anmeldung: 30.12.2015
(73) Patentinhaber: Hegler, Ralph Peter, 97688 Bad Kissingen (DE)
(72) Erfinder: Hegler, Ralph Peter, 97688 Bad Kissingen (DE)
(74) Vertreter: Rau, Schneck & Hübner Patentanwälte Rechtsanwälte PartGmbB

(56) Entgegenhaltungen:
- EP-A1- 0 595 742
- EP-A2- 1 286 099
- EP-A2- 2 230 359
- DE-U1- 9 408 350
- US-A- 3 897 090
- US-A- 3 929 359
- US-A- 5 934 315

## Beschreibung

Die Erfindung betrifft einen Rohr-Verbindungs-Bausatz nach dem Oberbegriff des Anspruchs 1.

Derartige Rohr-Verbindungs-Bausätze aus thermoplastischem Kunststoff werden eingesetzt, um in einen an sich durchgehenden Abwasser-Leitungsstrang einen Inspektions- oder Revisions-Schacht einzufügen oder aber um einen Zulauf vorzusehen. Die Adapter-Stücke dienen dazu, unterschiedliche Durchmesser bzw. Nennweiten der an das Rohr-Verbindungs-Element anzuschließenden Leitungen und der Anschluss-Muffen des Rohr-Verbindungs-Elements auszugleichen, wobei dann, wenn die anzuschließende Leitung den gleichen Durchmesser bzw. die gleichen Nennweiten wie die entsprechende Anschluss-Muffe aufweist, naturgemäß kein Adapter-Stück notwendig ist.

Aus der DE 94 08 350 U1 ist ein derartiger Rohr-Verbindungs-Bausatz bekannt, bei dem die die Spitzenden der Adapter-Stücke nach außen vorspringende sich in Umfangsrichtung erstreckende Rippen aufweisen. An den Anschluss-Muffen sind nach innen vorspringende elastische Zungen ausgebildet, die beim Ineinanderstecken der Spitzenden der Adapter-Stücke in jeweils einer Anschluss-Muffe von den Rippen am Spitzende hintergriffen werden. Die Zungen und Rippen sind um 120° auf dem Umfang der Anschluss-Muffen und der Spitzenden der Adapter-Stücke versetzt angeordnet, so dass die Verbindung zwischen Adapter-Stücken und Anschluss-Muffen durch Drehen des Adapter-Stücks hergestellt bzw. gelöst werden kann. Nachteilig hieran ist u. a., dass die elastischen Zungen durch einen gesonderten Herstellungsvorgang hergestellt werden müssen. Des Weiteren ist nachteilig, dass zwischen dem jeweiligen Spitzende eines Adapter-Stücks und der Innenwand der Anschluss-Muffe ein relativ großer Spalt ausgebildet sein muss, der mindestens die Weite der Höhe der Rippen hat.

Aus der EP 1 286 099 A2 ist eine Verbindungsanordnung von Kunststoffwellrohren bekannt, wobei an einem sich konisch verjüngenden Spitzende eines Wellrohres eine nach außen vorspringende Eingriffserstreckung in Form eines Verriegelungszapfens angebracht ist. In einer sich nach außen konisch erweiternden Muffe eines mit dem erstgenannten Wellrohr zu verbindenden Wellrohres ist ein sich nach außen erstreckender, im Anfangsbereich parallel zur Achse des Rohres und am Ende quer hierzu erstreckender Haltebereich in Form einer Einführ-Nut bzw. einer Kulissenführung ausgebildet. Das Verbinden der beiden Rohre erfolgt in der Weise, dass anfangs das Rohr mit dem Spitzende in Achsrichtung in die Muffe eingeführt wird. Im Abknickbereich des Ganges bzw. der Kulissenführung wird dann das Rohr in Umfangsrichtung gedreht und anschließend wieder etwas in Achsrichtung zurückgezogen, wodurch eine axial feste Verbindung hergestellt wird.

Aus der US 3,929,359 A ist es bekannt, an einem zylindrischen Spitzende eines Wellrohres sich in Umfangsrichtung erstreckende Verriegelungszapfen auszubilden. An dem Wellrohr, in das das Spitzende einzuführen ist, werden die Wellungen mit entsprechenden Durchlässen versehen, die eine Einführ-Nut für die Verriegelungszapfen bilden. Nach dem Einschieben des Spitzendes wird das Rohr mit Spitzende gedreht, sodass eine auszugfeste Verbindung zwischen den Rohren hergestellt wird.

Aus der US 3,897,090 A ist es zur Verbindung zweier Wellrohre bekannt, an einer an einem Wellrohr ausgebildeten zylindrischen Muffe nach innen vorspringende, sich in Umfangsrichtung erstreckende Verriegelungszapfen auszubilden.

Diese Verriegelungszapfen verformen beim Einschieben die beiden Wellrohre leicht oval und rasten nach dem Zusammenstecken der Rohre in die Wellung des inneren Wellrohrs ein, wobei sich die Wellrohre wieder elastisch in ihre Kreisquerschnittsform zurückverformen. Aus der EP 0 595 742 A1 ist es bekannt, Wellrohre miteinander zu verbinden. Ein Wellrohr weist ein Spitzende auf, an dessen Ende sich in Umfangsrichtung erstreckenden Wellungen als Rippen ausgebildet sind. Am anderen mit einer Muffe versehenen Rohr sind entsprechende nach außen vorspringende, sich ebenfalls in Umfangsrichtung erstreckende Rippen vorgesehen, in die die Rippen des Spitzendes eingreifen.

Aus der EP 2 230 359 A2 und der US 5,934,315 sind Rohr-Verbindungs-Bausätze nach dem Oberbegriff des Anspruches 1 bekannt, bei denen keine Einrichtungen zur festen Verbindung vorgesehen sind.

Der Erfindung liegt die Aufgabe zugrunde, eine leicht herstellbare und zuverlässige Verbindung zwischen der jeweiligen Anschluss-Muffe des Rohr-Verbindungs-Elements und dem Spitzende des Adapter-Stücks zu schaffen.

Diese Aufgabe wird erfindungsgemäß bei dem Rohr-Verbindungs-Bausatz nach dem Oberbegriff des Anspruchs 1 durch die Merkmale im Kennzeichnungsteil des Anspruchs 1 gelöst. Beim Einschieben des Spitzendes des Adapter-Stücks in die Anschluss-Muffe des Rohr-VerbindungsElements kommen die am Spitzende angeordneten Dichtungselemente nicht in Kontakt mit Verriegelungs-Einrichtungen, beispielsweise von der Anschluss-Muffe nach innen vorspringenden Arretiernocken. Während des Einschubvorgangs wird die Anschluss-Muffe durch die Verriegelungs-Zapfen leicht oval verformt, bis diese in die einander diametral gegenüberliegenden Verriegelungs-Öffnungen einrasten, wobei die Anschluss-Muffe sich elastisch in ihre Kreisquerschnittsform zurückverformt. Mit einem geeigneten Werkzeug kann die Verbindung unter elastischer Oval-Verformung der Anschluss-Muffe wieder gelöst werden. Außerdem kann das Spitzende des jeweiligen Adapter-Stücks der entsprechenden Anschluss-Muffe weitgehend spielfrei angepasst werden, was zu einer Reduktion von möglichen Dichtungsproblemen führt. Es wird erreicht, dass die Verbindung zwischen einem Adapter-Stück und der entsprechenden Anschluss-Muffe exakt geradlinig erfolgen kann und dass auch das Aufweiten der Anschluss-Muffe erleichtert wird. Weiterhin wird sichergestellt, dass am Beginn des Einschiebens der Verriegelungs-Zapfen in die jeweilige Anschluss-Muffe der Einschubvorgang weich beginnt, so dass am Ende vor dem Einrasten der Verriegelungs-Zapfen in die jeweilige Verriegelungs-Öffnung eine ausreichende Verformung der Anschluss-Muffe erfolgt.

Die erwähnte Oval-Verformung wird in besonders einfacher Weise durch die Weiterbildung nach Anspruch 2 erreicht.

Durch die Weiterbildung nach Anspruch 3 wird erreicht, dass das Rohr-Verbindungs-Element einerseits als zentrales Element für den Anschluss eines Inspektions- oder Revisions-Schachtes an eine Hauptleitung und andererseits als Abzweig-Element für eine solche Leitung eingesetzt werden kann.

Das Einführen des Spitzendes in die Anschluss-Muffe wird durch die Weiterbildung nach Anspruch 4 erleichtert.

Die Ansprüche 5 und 6 geben zwei Varianten für die Ausgestaltung der Verriegelungs-Öffnungen wieder, wobei die Ausgestaltung nach Anspruch 8 eingesetzt wird, wenn das Rohr-Verbindungs-Element aus Kunststoff im Spritzgieß-Verfahren hergestellt wird, während die Ausgestaltung nach Anspruch 6 zum Tragen kommt, wenn das Rohr-Verbindungs-Element aus Kunststoff im Rotations-Gießverfahren hergestellt wird.

Die Ansprüche 7 und 8 geben besonders vorteilhafte Ausgestaltungen für das Rohr-Verbindungs-Element wieder.

Die Weiterbildung nach Anspruch 9 schließt an die Ausgestaltung nach Anspruch 8 an.

Durch die Weiterbildung nach Anspruch 10 wird erreicht, dass die Muffen der Adapter-Stücke bei vertikaler Anordnung des Rohr-VerbindungsElements und bei liegender Anordnung jeweils etwa niveaugleich mit dem Rohr-Verbindungs-Element auf dem Boden aufliegen können.

Durch die Weiterbildung nach Anspruch 11 wird erreicht, dass die Oval-verformung der jeweiligen Anschluss-Muffe des Rohr-VerbindungsElements beim Einschieben des Spitzendes des jeweiligen Adapter-Stücks nur im Bereich des freien Endes erfolgt, dass also keine Verformung des Dichtungs-Bereichs zwischen der Anschluss-Muffe und dem jeweiligen Spitzende der Muffe des entsprechenden Adapter-Stücks erfolgt.

Weitere Merkmale, Vorteile und Einzelheiten der Erfindung ergeben sich aus der nachfolgenden Beschreibung von Ausführungsbeispielen anhand der Zeichnungen. Es zeigt:
- Fig. 1: ein Rohr-Verbindungs-Element nach der Erfindung in einer Anwendung als Inspektions-/Revisions-Schacht in teilweise aufgebrochener Darstellung,
- Fig. 2: eine um 90° gegenüber Fig. 1 gedrehte Darstellung,
- Fig. 3: ein Rohr-Verbindungs-Element in einer Ansicht entsprechend Fig. 1 in einer Anwendung mit einem Zulauf in eine Haupt-Leitung,
- Fig. 4: eine Darstellung des Rohr-Verbindungs-Elementes nach Fig. 3 in einer Darstellung nach Fig. 2,
- Fig. 5: die Verbindung zwischen einem Adapter-Stück und einer Anschluss-Muffe des Rohr-Verbindungs-Elementes in aufgebrochener Darstellung,
- Fig. 6: eine Teil-Draufsicht auf Fig. 5 entsprechend dem Sichtpfeil VI in Fig. 5,
- Fig. 7: eine Teil-Schnitt-Darstellung durch Fig. 5 entsprechend der Schnittlinie VII-VII in Fig. 5,
- Fig. 8: eine Teil-Stirn-Ansicht gemäß dem Sichtpfeil VIII in Fig. 5,

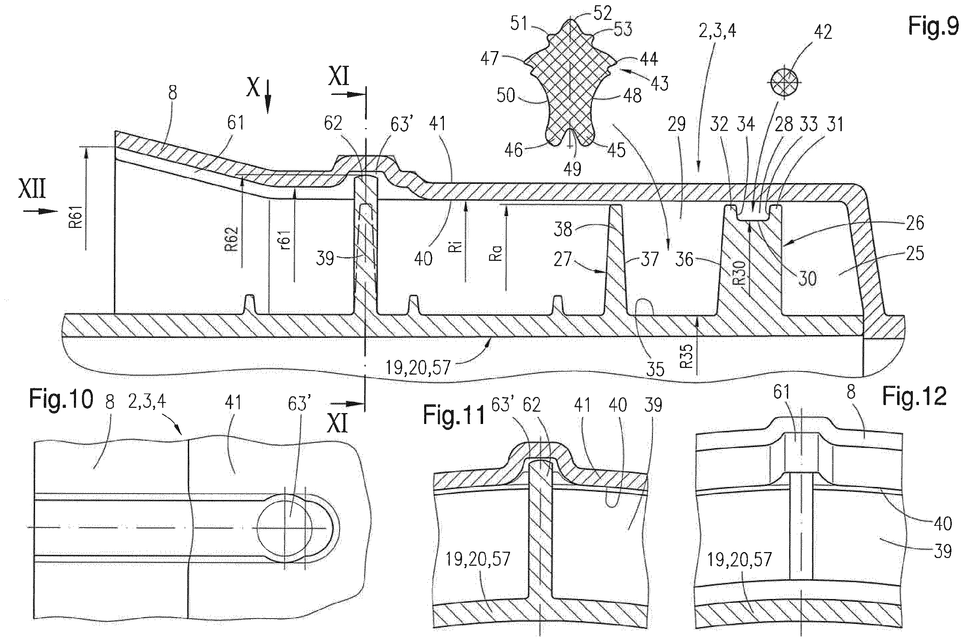

- Fig. 9: eine abgewandelte Ausführungsform in einer Darstellung entsprechend Fig. 5,
- Fig. 10: eine Teil-Draufsicht entsprechend dem Sichtpfeil X in Fig. 9,
- Fig. 11: eine Teil-Schnitt-Darstellung entsprechend der Schnittlinie XI-XI in Fig. 9 und
- Fig. 12: eine Teil-Stirn-Ansicht entsprechend dem Sichtpfeil XII in Fig. 9.

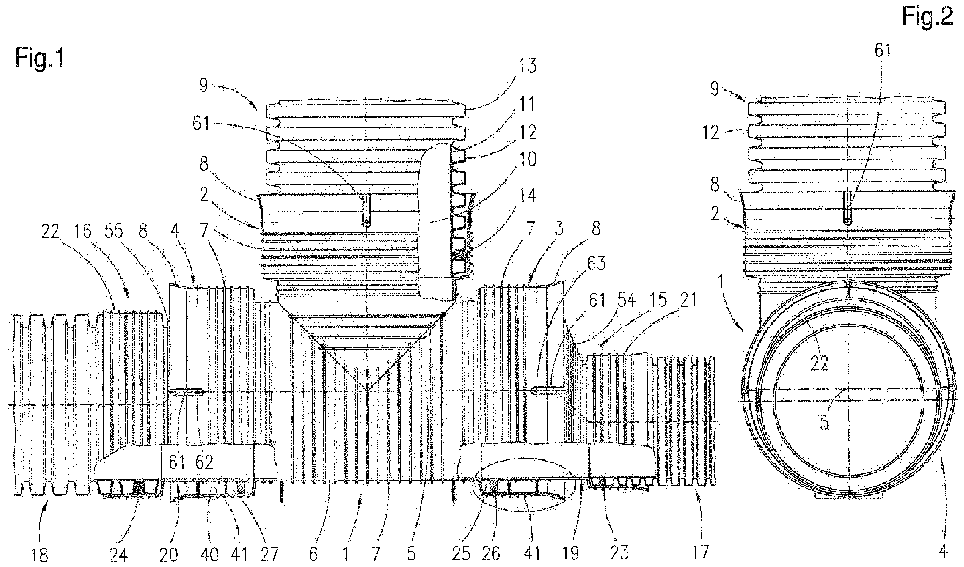

Das in den Figuren 1 und 2 dargestellte Rohr-Verbindungs-Element 1 hat in grober Annäherung die Form eines auf dem Kopf stehenden T. Nach oben erstreckt sich eine erste Anschluss-Muffe 2. Am unteren Ende erstrecken sich gleichsam als Quersteg des T eine zweite Anschluss-Muffe 3 und eine dritte Anschluss-Muffe 4, die eine durchgehende gemeinsame Achse 5 aufweisen. Sowohl der Grundkörper 6 des Rohr-Verbindungselements 1 als auch die Anschluss-Muffen 2, 3, 4 sind jeweils im Wesentlichen zylindrisch ausgebildet und weisen auf ihrer Außenseite Verstärkungs-Rippen 7 auf. An ihren freien Enden sind sie mit einem sich nach außen erweiternden Einführ-Trichter 8 versehen. Alle drei Anschluss-Muffen 2, 3, 4 sind gleich ausgebildet. In die obere erste Anschluss-Muffe 2 ist ein doppelwandiges gewelltes Verbund-Rohr 9 mit einem als Spitzende 10 dienenden Ende eingeführt. Aufbau und Herstellung derartiger Verbund-Rohre aus Kunststoff sind beispielsweise aus der EP 0 563 575 A2 bekannt. Sie weisen ein im Wesentlichen zylindrisches Innen-Rohr 11 und ein gewelltes Außen-Rohr 12 auf, das Wellungen 13 aufweist, die in ihrem jeweiligen Fußbereich mit dem Innen-Rohr 11 verschweißt sind. Zwischen zwei Wellungen 13 des Spitzendes 10 ist eine gegen die erste Anschluss-Muffe dichtend anliegende Dichtung 14 angeordnet. Bei entsprechend großem Innendurchmesser des Verbund-Rohres 9 dient es zusammen mit dem Rohr-Verbindungs-Element 1 als Inspektions- oder Revisions-Schacht.

In den zweiten und dritten Anschluss-Muffen 3, 4 sind ein erstes Adapter-Stück 15 bzw. ein zweites Adapter-Stück 16 angeordnet, die benötigt werden, um den Anschluss einer ersten Leitung 17 bzw. einer zweiten Leitung 18 mit gegenüber der zweiten bzw. der dritten Anschluss-Muffe 3 bzw. 4 unterschiedlichen Durchmessern zu ermöglichen. In diesem Fall ist in Fig. 1 rechts der Einlauf und links der Auslauf des Schachtes dargestellt.

Die Adapter-Stücke 15 bzw. 16 bestehen jeweils aus einem ersten Spitzende 19 bzw. einem zweiten Spitzende 20, das mit einer ersten Muffe 21 bzw. einer zweiten Muffe 22 einstückig ausgebildet ist. Das als Spitzende dienende freie Ende der ersten Leitung 17 und das der zweiten Leitung 18 ist jeweils in die erste Muffe 21 bzw. die zweite Muffe 22 eingeschoben, wobei jeweils eine Dichtung 23 bzw. 24 zur Abdichtung zwischen der ersten Leitung 17 und der ersten Muffe 21 bzw. der zweiten Leitung 18 und der zweiten Muffe 22 dient.

Das erste Spitzende 19 des ersten Adapter-Stücks 15 und das zweite Spitzende 20 des zweiten Adapter-Stücks 16 sind dagegen so ausgebildet, dass eine Abdichtung für hohe Abdichtungsanforderungen als auch eine Abdichtung gegen geringere Abdichtungsanforderungen realisierbar ist.

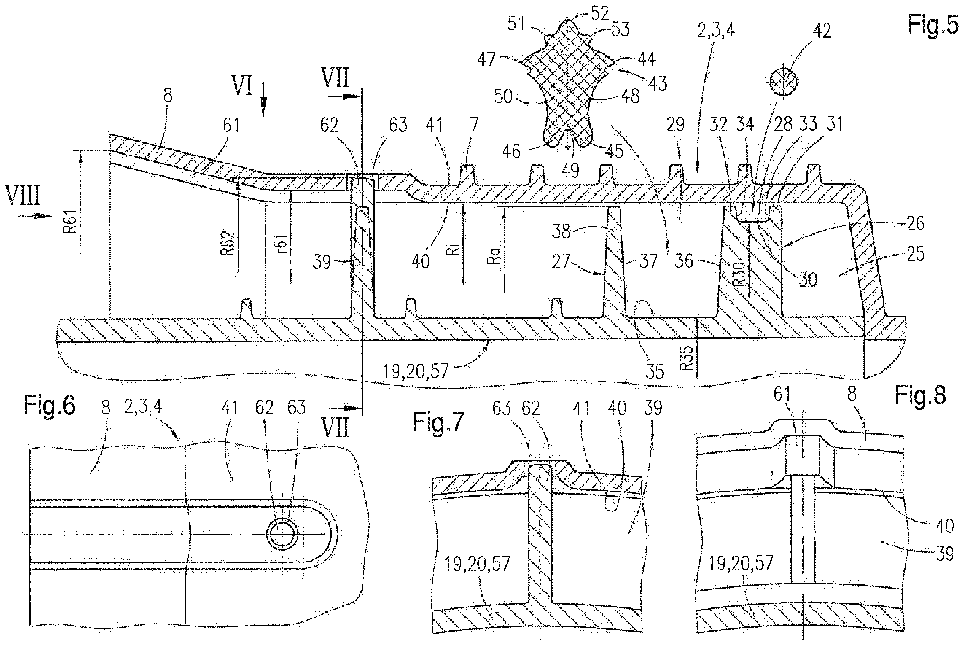

Die ersten und zweiten Spitzenden 19, 20 der Adapter-Stücke 15, 16 sind gleich ausgebildet, weshalb die nachfolgende Beschreibung für beide Spitzenden 19, 20 gilt. Hierbei wird auch auf Fig. 5 Bezug genommen. Benachbart zum freien Ende 25 des Spitzendes 19 bzw. 20 sind ein erstes Dichtring-Gehäuse 26 und ein zweites Dichtring-Gehäuse 27 auf dem Umfang des ansonsten zylindrischen Spitzendes 19 ausgebildet. In dem dem freien Ende 25 benachbarten ersten Dichtring-Gehäuse 26 ist eine erste Dichtring-Kammer 28 ausbildet, die nach außen offen ist. Unmittelbar angeschlossen an das erste Dichtring-Gehäuse 26 ist im zweiten Dichtring-Gehäuse 27 eine ebenfalls ringförmige, nach außen offene zweite Dichtring-Kammer 29 ausgebildet.

Die erste Dichtring-Kammer 28 wird durch einen ringförmigen ersten Boden 30 und zwei radial nach außen vorstehende Ringstege 31, 32 begrenzt, die zur ersten Dichtring-Kammer 28 hin Seitenflächen 33, 34 bilden. Die zweite Dichtring-Kammer 29 weist ebenfalls einen ringförmigen zweiten Boden 35 auf und wird zusätzlich durch Dichtflächen 36, 37 begrenzt, die einerseits an dem dem ersten Dichtring-Gehäuse 26 zugehörigen Ringsteg 32 und andererseits an einem gegenüberliegenden Ringsteg 38 ausgebildet sind. Die Querschnittsfläche der ersten Dichtring-Kammer 28 ist deutlich kleiner als die Querschnittsfläche der zweiten Dichtring-Kammer 29. Dies wird primär dadurch bewirkt, dass der Radius R30 des ersten Bodens 30 größer ist als der Radius R35 des zweiten Bodens 35. Unterschiedliche Querschnitte der Dichtring-Kammern 28, 29 können aber auch durch deutlich unterschiedliche axiale Erstreckungen der Dichtring-Kammern 28, 29 bewirkt werden.

Die Ringstege 31, 32, 38 haben gleichermaßen wie ein noch weiter vom freien Ende 25 beabstandeter ringförmiger Zentriersteg 39 einen Außenradius Ra, der geringfügig kleiner als der Innenradius Ri der zylindrischen Dichtfläche 40 des zylindrischen Abschnitts 41 der Anschluss-Muffe 3 bzw. 4 ist, so dass ein in die Muffe 3 bzw. 4 gestecktes Spitzende 19 bzw. 20 zentriert in diese eingeführt und in dieser gehalten wird.

Das erste Dichtring-Gehäuse 26 dient zur Aufnahme eines ersten Dichtrings 42 in der ersten Dichtring-Kammer 28. Das zweite Dichtring-Gehäuse 27 dient zur Aufnahme eines zweiten Dichtrings 43 in der zweiten Dichtring-Kammer 29, wobei selbstverständlich nur jeweils alternativ ein erster Dichtring 42 oder ein zweiter Dichtring 43 eingesetzt wird.

Bei dem ersten Dichtring 42 handelt es sich in der Regel um einen sogenannten O-Ring, der also etwa einen Kreisquerschnitt aufweist. Er wird bei der Konstellation nach Fig. 1 eingesetzt, wenn beispielsweise nur geringe Anforderungen an die Dichtheit der Muffenverbindung gestellt werden. Je nach Toleranz zwischen dem Innenradius Ri und dem Außenradius Ra erfolgen unterschiedliche Verformungen des ersten Dichtrings 42. Je größer die Differenz zwischen Ri und Ra ist, umso geringer ist die Dichtwirkung. Die Querschnittsfläche der ersten Dichtring-Kammer 28 ist größer als die Querschnittsfläche des ersten Dichtrings 42. Der erste Dichtring 42 ragt in montiertem Zustand radial über die Ringstege 31, 32 hinaus, hat also einen größeren Außendurchmesser als Ra. Der erste Dichtring 42 wird beim Einschieben in die Muffe 21 komprimiert und elliptisch verformt; er liegt im Endzustand allerdings nicht an den Seitenflächen 33, 34 an. Die erste Dichtring-Kammer 28 bildet zusammen mit dem ersten Dichtring 42 also eine Dichtungskombination für geringe Dichtungs-Anforderungen.

Die zweite Dichtring-Kammer 29 hat ebenfalls eine deutlich größere Querschnittsfläche als der zweite Dichtring 43, der mehrere Dichtstege 44, 45, 46, 47 aufweist, die an dem ringförmigen zweiten Boden 35 und den Dichtflächen 36, 37 anliegen, wobei zwischen den Dichtstegen 44 bis 47 Einschnürungen 48, 49, 50 ausgebildet sind, in die hinein der zweite Dichtring 43 verformt werden kann. Außerdem weist der zweite Dichtring 43 Dichtstege 51, 52, 53 auf, die gegen die zylindrische innere Dichtfläche 40 der Muffe 3 bzw. 4 anliegen. Ein derartiger Dichtring 43 ist beispielsweise aus der EP 2 230 359 A2 bekannt, wobei dies grundsätzlich nicht beschränkend ist. Der zweite Dichtring 43 liegt auch bei einer großen Differenz zwischen Ri und Ra an den Dichtflächen 36, 37 und dem zweiten Boden 35 und der inneren Dichtfläche 40 an und kann in einem großen Bereich komprimiert werden. Es findet also eine Abdichtung statt, die höheren Dichtungsanforderungen entspricht. Die entsprechenden Anforderungen ergeben sich beispielsweise aus DIN 4262-1. Zwischen den Muffen 21, 22 und den Spitzenden 19, 20 der Adapter-Stücke 15, 16 sind jeweils - aufgrund der unterschiedlichen Nennweiten der Muffen 21, 22 - unterschiedliche Übergangs-Abschnitte 54, 55 ausgebildet.

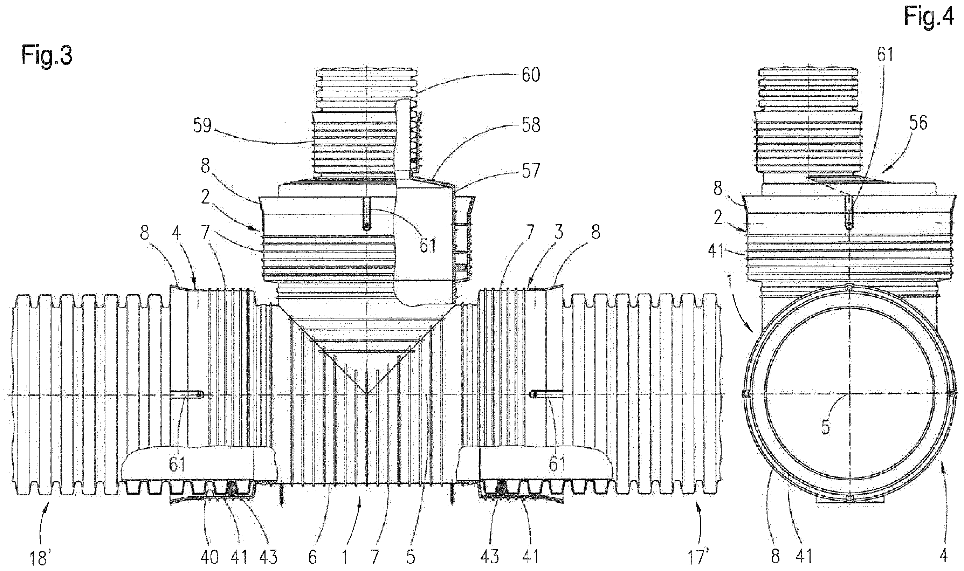

In dem Ausführungsbeispiel nach den Fig. 1 und 2 waren mit dem Verbindungselement 1 Adapter-Stücke 15, 16 verbunden, um einerseits den Durchmesser/Nennweiten-Unterschied zwischen der als Einlauf-Leitung dienenden ersten Leitung 17 und der zweiten Anschluss-Muffe 3 und andererseits den Durchmesser/Nennweiten-Unterschied zwischen der dritten Anschluss-Muffe 4 und der als Auslauf-Leitung dienenden zweiten Leitung 18 auszugleichen. Bei dem Ausführungsbeispiel nach den Fig. 3 und 4 ist dagegen nicht eine Schacht-Version dargestellt, sondern ein Zulauf in eine Haupt-Leitung. Da bei diesem Ausführungsbeispiel die meisten Teile identisch mit denen des Ausführungsbeispiels nach den Fig. 1 und 2 sind, werden insoweit ohne erneute Beschreibung identische Bezugsziffern verwendet. Soweit sich Teile nur durch ihre Dimensionierung unterscheiden, Bedarf es ebenfalls keiner erneuten Beschreibung. Diese Teile werden mit derselben Bezugsziffer wie im Ausführungsbeispiel nach den Fig. 1 und 2, jedoch mit einem hoch gesetzten Strich bezeichnet. Die erste Leitung 17' und die zweite Leitung 18' bilden zusammen mit dem entsprechenden Bereich des Rohr-Verbindungs-Elementes 1 die Hauptleitung. Die Leitungen 17', 18' sind mit ihren als Spitzende dienenden Enden jeweils in die zweite Anschluss-Muffe 3 bzw. die dritte Anschluss-Muffe 4 gesteckt und dort in der geschilderten Weise abgedichtet.

In die erste Anschluss-Muffe 2, die bei diesem Ausführungsbeispiel ebenfalls in der Horizontalen und nicht in der Vertikalen angeordnet ist, ist ein drittes Adapter-Stück 56 eingesetzt, das mit einem dritten Spitzende 57 in der ersten Anschluss-Muffe 2 angeordnet ist. Der Aufbau dieses dritten Spitzendes 57 entspricht den bereits geschilderten. Über einen ÜbergangsAbschnitt 58 schließt sich eine dritte Muffe 59 an, in die eine als ZulaufLeitung dienende dritte Leitung 60 einmündet, die in gleicher Weise ausgebildet und abgedichtet ist, wie es bereits geschildert wurde.

Während die 1., 2. und 3. Leitung 17, 18, 17', 18', 60 und das Verbund-Rohr 9 jeweils mittels einer einfachen Steckverbindung mit der jeweiligen Muffe verbunden sind, sind die Adapter-Stücke 15, 16, 56 fest mit der jeweiligen Anschluss-Muffe 2, 3, 4 verriegelt. Hierzu weist jede Anschluss-Muffe 2, 3, 4 im Bereich des jeweiligen Einführ-Trichters 8 und daran anschließend Einführ-Nuten 61 auf. Diese erstrecken sich also parallel zur Achse 5 vom jeweiligen äußeren Rand der Anschluss-Muffe 2, 3, 4 parallel zur Achse 5 bis in den zylindrischen Abschnitt 41 und zwar um 90° gegeneinander versetzt.

Auf dem jeweiligen Spitzende 19, 20 oder 57 sind um 180° gegeneinander versetzt und ebenfalls in einer Querschnittsebene zwei Verriegelungs-Zapfen 62 angeordnet, die eine solche radiale Erstreckung relativ zur Achse 5 haben, dass sie im Einführ-Trichter 8 in zwei einander diametral gegenüberliegende Einführ-Nuten 61 eingeführt werden können und beim Einschieben bis in den zylindrischen Abschnitt 41 die jeweilige Anschluss-Muffe 2, 3, 4 leicht oval verformen. In jeder der Einführ-Nuten 61 ist ebenfalls in einer Querschnittsebene bei der Ausführung nach den Fig. 5 bis 8 eine als Durchbrechung ausgebildete Verriegelungs-Öffnung 63 im zylindrischen Abschnitt 41 der Anschluss-Muffe 2, 3 bzw. 4 vorgesehen, in die die beiden einander diametral gegenüberliegenden Verriegelungs-Zapfen 62 einrasten, wodurch die Verformung der Anschluss-Muffe 2, 3, 4 wieder elastisch rückgängig gemacht wird. Die Verriegelungs-Zapfen 62 können - wie in den Fig. 5 bis 8 dargestellt - an dem Zentriersteg 39 ausgebildet sein, über den sie - wie aus Fig. 5 hervorgeht - nur um ein relativ geringes Maß nach außen vorstehen.

Wie aus Fig. 5 erkennbar ist, ist der Radius R62 des jeweiligen Verriegelungs-Zapfens 62 kleiner als der Radius R61 der jeweiligen Einführ-Nut 61 am freien Ende der Anschluss-Muffe 2, 3, 4, aber größer als der Radius r61 der Einführ-Nut 61 unmittelbar vor der jeweiligen Verriegelungs-Öffnung 63. Wie weiter aus Fig. 5 hervorgeht, sind die Dichtungseinrichtungen bezogen auf das freie Ende 25 des Spitzendes 19, 20, 57 den Verriegelungs-Zapfen 62 vorgeordnet. Beim Einschieben des Spitzendes 19, 20, 57 in die entsprechende Anschluss-Muffe 2, 3, 4 werden die Dichtungen 42 oder 43 nicht durch nach innen vorragende Arretiernocken oder dergleichen beeinträchtigt.

Die Ausbildung nach den Fig. 5 bis 8 lässt sich in besonders einfacher Weise herstellen, wenn das Rohr-Verbindungs-Element 1 im Spritzgieß-Verfahren aus Kunststoff hergestellt wird. Wenn es dagegen im Rotationsgieß-Verfahren aus Kunststoff hergestellt wird, dann ist es zweckmäßig, wenn die Verriegelungs-Öffnungen 63' gleichsam als Ausbeulungen des zylindrischen Abschnitts 41 der Anschluss-Muffen 2, 3, 4 ausgebildet sind. Dadurch, dass die Spitzenden 19, 20 bzw. 57 mit den diametral angeordneten Verriegelungs-Zapfen 62 versehen sind, wird erreicht, dass die Adapter-Stücke 15, 16 bzw. 56 in unterschiedlichen, um jeweils 90° gedrehten Positionen mit den Anschluss-Muffen 2, 3, 4 des Rohr-Verbindungselements 1 verriegelt werden können. Selbstverständlich kann die Zahl der Einführ-Nuten 61 mit Verriegelungs-Öffnungen 63, 63' auch größer sein. Entscheidend ist, dass jeweils zwei Einführ-Nuten 61 einander diametral gegenüberliegend vorgesehen sind.

Sowohl das Rohr-Verbindungs-Element 1 als auch die Adapter-Stücke 15, 16, 56 als auch die Leitungen 17, 18, 60, 17', 18' bestehen aus thermoplastischem Kunststoff.

Wie die Zeichnungen erkennen lassen, sind die Adapter-Stücke 15, 16, 56 exzentrisch ausgebildet. Die jeweiligen Muffen 21, 22, 59 sind nicht achsgleich mit den zugehörigen Spitzenden 19, 20, 57 ausgebildet.

Wie die vorstehende Beschreibung zu den Ausführungsbespielen erkennen lässt, bildet jeweils ein Rohr-Verbindungs-Element 1 mit ein oder mehreren Adapter-Stücken 15, 16, 56 einen Rohr-Verbindungs-Bausatz.

## Patentansprüche

1. Rohr-Verbindungs-Bausatz
bestehend aus einem Rohr-Verbindungs-Element (1) und mindestens einem Adapter-Stück (15, 16, 56), jeweils aus thermoplastischem Kunststoff,
wobei das Rohr-Verbindungs-Element (1) einen Grundkörper (6) mit mindestens zwei jeweils ein freies Ende und Kreisquerschnittsform aufweisende Anschluss-Muffen (2, 3, 4) mit einer Achse (5) aufweist, wobei das mindestens eine Adapter-Stück (15, 16, 56) ein der Anschluss-Muffe (2, 3, 4) angepasstes Spitzende (19, 20, 57) und eine Muffe (21, 22, 59) zur Aufnahme einer Leitung (17, 18, 60, 17', 18') aufweist,
wobei das Spitzende (19, 20, 57) des Adapter-Stücks (15, 16, 56) Einrichtungen zur Halterung mindestens einer Dichtung (42, 43) zur Abdichtung zwischen der Anschluss-Muffe (2, 3, 4) und dem jeweiligen Spitzende (19, 20, 57) des mindestens einen Adapter-Stücks (15, 16, 56) aufweist,
**dadurch gekennzeichnet,**
**dass,** das Spitzende (19, 20, 57) des jeweiligen Adapter-Stücks (15, 16, 56) mindestens ein Paar voneinander diametral gegenüberliegenden Verriegelungs-Zapfen (62) aufweist, die einen Radius R62 haben, der dem Abstand ihres Endes zur Achse (5) entspricht, und **dass** die jeweilige Anschluss-Muffe (2, 3, 4) den Verriegelungs-Zapfen (62) angepasste Verriegelungs-Öffnungen (63, 63') aufweist, in die die Verriegelungs-Zapfen (62) einrasten,
**dass** von dem freien Ende der Anschluss-Muffe (2, 3, 4) zur jeweiligen Verriegelungs-Öffnung (63, 63') eine Einführ-Nut (61) führt,
**dass** für den Radius R61 der jeweiligen Einführ-Nut (61) am freien Ende der Anschluss-Muffe (2, 3, 4) im Verhältnis zum relativ zur Achse (5) erstreckten Radius R62 der Verriegelungs-Zapfen (62) gilt: R61 >= R62,
**dass** für den Radius r61 der jeweiligen Einführ-Nut (61) an der Verriegelungs-Öffnung (63, 63') im Verhältnis zum Radius R62 des jeweiligen Verriegelungs-Zapfens (62) gilt: r61 < R62,
**dass** die Anschluss-Muffe (2, 3, 4) beim Einschieben des Adapterstücks (15, 16, 56) durch die Verriegelungszapfen (62) leicht oval verformbar ist und
**dass** die Anschluss-Muffe (2, 3, 4) elastisch in ihre Kreisquerschnittsform zurückverformbar ist, sobald die Verriegelungs-Zapfen (62) in die entsprechenden Verriegelungsöffnungen (63, 63') eingerastet sind.

2. Rohr-Verbindungs-Bausatz nach Anspruch 1 oder 2, **dadurch gekennzeichnet,**
**dass** das Adapter-Stück (15, 16, 56) nur ein Paar voneinander diametral gegenüberliegenden Verriegelungs-Zapfen (62) aufweist.

3. Rohr-Verbindungs-Bausatz nach Anspruch 1 oder 2, **dadurch gekennzeichnet,**
**dass** die Anschluss-Muffe (2, 3, 4) mindestens zwei Paar voneinander diametral gegenüberliegenden Verriegelungs-Öffnungen (63, 63') und vorzugsweise zwei Paar um 90° gegeneinander versetzte Verriegelungs-Öffnungen (63, 63') aufweist.

4. Rohr-Verbindungs-Bausatz nach einem der Ansprüche 1 bis 3,
**dadurch gekennzeichnet,**
**dass** die jeweilige Anschluss-Muffe (2, 3, 4) an ihrem freien Ende einen Einführ-Trichter (8) aufweist.

5. Rohr-Verbindungs-Bausatz nach einem der Ansprüche 1 bis 4,
**dadurch gekennzeichnet,**
**dass** die jeweilige Verriegelungs-Öffnung (63) als Durchbrechung der Anschluss-Muffe (2, 3, 4) ausgebildet ist.

6. Rohr-Verbindungs-Bausatz nach einem der Ansprüche 1 bis 4,
**dadurch gekennzeichnet,**
**dass** die jeweilige Verriegelungs-Öffnung (63') als Ausbeulung der Anschluss-Muffe (2, 3, 4) ausgebildet ist.

7. Rohr-Verbindungs-Bausatz nach einem der Ansprüche 1 bis 6,
**dadurch gekennzeichnet,**
**dass** das Rohr-Verbindungs-Element (1) T-förmig mit drei Anschluss-Muffen (2, 3, 4) ausgebildet ist.

8. Rohr-Verbindungs-Bausatz nach einem der Ansprüche 1 bis 7,
**dadurch gekennzeichnet,**
**dass** die Anschluss-Muffen (2, 3, 4) gleich ausgebildet sind.

9. Rohr-Verbindungs-Bausatz nach einem der Ansprüche 1 bis 8 und insbesondere nach Anspruch 7, **dadurch gekennzeichnet,**
**dass** bei Einsatz mehrerer Adapter-Stücke (15, 16, 56) deren Spitzenden (19, 20, 57) gleich ausgebildet sind.

10. Rohr-Verbindungs-Bausatz nach einem der Ansprüche 1 bis 9,
**dadurch gekennzeichnet,**
**dass** die Muffen (21, 22, 59) der Adapter-Stücke (15, 16, 56) exzentrisch zum jeweiligen Spitzende (19, 20, 57) angeordnet sind.

11. Rohr-Verbindungs-Bausatz nach einem der Ansprüche 1 bis 10,
**dadurch gekennzeichnet,**
**dass -** bezogen auf das freie Ende (25) des jeweiligen Spitzendes (19, 20, 57) eines Adapter-Stücks (15, 16, 56) - die Verriegelungs-Zapfen (62) hinter den Einrichtungen zur Halterung mindestens einer Dichtung (42, 43) angeordnet sind.

## Claims

1. Pipe connection kit
consisting of a pipe connection element (1) and at least one adapter piece (15, 16, 56), each made of a thermoplastic material,
wherein the pipe connetion element has a base body (6) comprising at least two connetion sleeves (2, 3, 4) with an axis (5), with each of the connection sleeves (2, 3, 4) having a respective free end and a circular cross-sectional shape,
wherein the at least one adapter piece (15, 16, 56) has a spigot end (19, 20, 57) adapted to the connection sleeve (2, 3, 4) and a sleeve (21, 22, 59) for receiving a line (17, 18, 60, 17', 18'),
wherein the spigot end (19, 20, 57) of the adapter piece (15, 16, 56) has means for holding at least one seal (42, 43) to provide sealing between the connection sleeve (2, 3, 4) and the respective spigot end (19, 20, 57) of the at least one adapter piece (15, 16, 56),
**characterised in**
**that** the spigot end (19, 20, 57) of the respective adapter piece (15, 16, 56) has at least one pair of locking pins (62) arranged diametrically opposite one another, the locking pins (62) having a radius R62 that corresponds to the distance of their respective end from the axis (5), and **that** the respective connection sleeve (2, 3, 4) has locking openings (63, 63') adapted to the locking pins (62), the locking openings (63, 63') being engaged by the locking pins (62),
**that** an insertion groove (61) runs from the free end of the connection sleeve (2, 3, 4) to the respective locking opening (63, 63'),
**that** the radius R61 of the respective insertion groove (61) at the free end of the connection sleeve (2, 3, 4) in relation to the radius R62 of the locking pin (62) extending relative to the axis (5) is such that R61 >= R62,
**that** the radius r61 of the respective insertion groove (61) at the locking opening (63, 63') in relation to the radius R62 of the respective locking pin (62) is such that r61 < R62,
**that** the connection sleeve (2, 3, 4) is deformable slightly ovally by the locking pins (62) when inserting the adapter piece (15, 16, 56), and **that** the connection sleeve (2, 3, 4) is elastically deformable back into its circular cross-sectional shape as soon as the locking pins (62) have engaged the respective locking openings (63, 63').

2. Pipe connection kit according to claim 1 or 2, **characterised in that** the adapter piece (15, 16, 56) has only one pair of locking pins (62) arranged diametrically opposite one another.

3. Pipe connection kit according to claim 1 or 2, **characterised in that** the connection sleeve (2, 3, 4) has at least two pairs of locking openings (63, 63') arranged diametrically opposite one another, and preferably two pairs of locking openings (63, 63') arranged such as to be staggered relative to one another by 90°.

4. Pipe connection kit according to any one of claims 1 to 3, **characterised in**
**that** the respective connetion sleeve (2, 3, 4) has a fill hopper (8) at its free end.

5. Pipe connection kit according to any one of claims 1 to 4, **characterised in**
**that** the respective locking opening (63) is configured as a breakthrough of the connection sleeve (2, 3, 4).

6. Pipe connection kit according to any one of claims 1 to 4, **characterised in**
**that** the respective locking opening (63') is configured as a bulge of the connection sleeve (2, 3, 4).

7. Pipe connection kit according to any one of claims 1 to 6, **characterised in**
**that** the pipe connection element (1) is T-shaped with three connection sleeves (2, 3, 4).

8. Pipe connection kit according to any one of claims 1 to 7, **characterised in**
**that** the connection sleeves (2, 3, 4) are configured equally.

9. Pipe connection kit according to any one of claims 1 to 8 and in particular according to claim 7, **characterised in**
**that** when using a plurality of adapter pieces (15, 16, 56), their spigot ends (19, 20, 57) are configured equally.

10. Pipe connection kit according to any one of claims 1 to 9, **characterised in**
**that** the sleeves (21, 22, 59) of the adapter pieces (15, 16, 56) are arranged eccentrically to the respective spigot end (19, 20, 57).

11. Pipe connection kit according to any one of claims 1 to 10, **characterised in**
**that** in relation to the free end (25) of the respective spigot end (19, 20, 57) of an adapter piece (15, 16, 56), the locking pins (62) are arranged behind the means for holding at least one seal (42, 43).

## Revendications

1. Assemblage de raccord tubulaire constitué d'un élément de raccord tubulaire (1) et d'au moins une pièce d'adaptateur (15, 16, 56), respectivement en matière synthétique thermoplastique,
dans lequel l'élément de raccord tubulaire (1) présente un corps de base (6) avec au moins deux manchons d'accouplement (2, 3, 4) présentant respectivement une extrémité libre et une forme en section transversale circulaire et dotés d'un axe (5), dans lequel la au moins une pièce d'adaptateur (15, 16, 56) présente une extrémité de pointe (19, 20, 57) adaptée au manchon d'accouplement (2, 3, 4) et un manchon (21, 22, 59) pour recevoir une conduite (17, 18, 60, 17', 18'),
dans lequel l'extrémité de pointe (19, 20, 57) de la pièce d'adaptateur (15, 16, 56) présente des dispositifs de maintien d'au moins un joint d'étanchéité (42, 43) pour assurer l'étanchéité entre le manchon d'accouplement (2, 3, 4) et l'extrémité de pointe (19, 20, 57) respective de la au moins une pièce d'adaptateur (15, 16, 56),
**caractérisé en ce que**
l'extrémité de pointe (19, 20, 57) de la au moins une pièce d'adaptateur (15, 16, 56) respective présente au moins une paire de broches de verrouillage (62) diamétralement opposées l'une à l'autre, qui ont un rayon R62 qui correspond à la distance entre son extrémité et l'axe (5), et
le manchon d'accouplement (2, 3, 4) respectif présente des ouvertures de verrouillage (63, 63') adaptées aux broches de verrouillage (62), lesquelles s'enclenchent dans lesdites ouvertures,
une rainure d'insertion (61) mène depuis l'extrémité libre du manchon d'accouplement (2, 3, 4) jusqu'à l'ouverture de verrouillage (63, 63') respective,
pour le rayon R61 de la rainure d'insertion (61) respective au niveau de l'extrémité libre du manchon d'accouplement (2, 3, 4), au regard du rayon R62 des broches de verrouillage (62) qui s'étend relativement à l'axe (5), s'applique : R61>=R62,
pour le rayon r61 de la rainure d'insertion (61) respective au niveau de l'ouverture de verrouillage (63, 63'), au regard du rayon R62 de la broche de verrouillage (62) respective, s'applique : r61<R62,
lors de l'enfoncement de la pièce d'adaptateur (15, 16, 56) par les broches de verrouillage (62), le manchon d'accouplement (2, 3, 4) est déformable de manière légèrement ovale, et
le manchon d'accouplement (2, 3, 4) peut élastiquement reprendre sa forme en section transversale circulaire dès lors que les broches de verrouillage (62) ont été enclenchées dans les ouvertures de verrouillage (63, 63') correspondantes.

2. Assemblage de raccord tubulaire selon la revendication 1 ou 2, **caractérisé en ce que**
la pièce d'adaptateur (15, 16, 56) présente uniquement une paire de broches de verrouillage (62) diamétralement opposées l'une à l'autre.

3. Assemblage de raccord tubulaire selon la revendication 1 ou 2, **caractérisé en ce que**
le manchon d'accouplement (2, 3, 4) présente au moins deux paires d'ouvertures de verrouillage (63, 63') diamétralement opposées l'une à l'autre et de préférence deux paires d'ouvertures de verrouillage (63, 63') décalées l'une de l'autre de 90°.

4. Assemblage de raccord tubulaire selon l'une quelconque des revendications 1 à 3, **caractérisé en ce que**
le manchon d'accouplement (2, 3, 4) respectif présente un entonnoir d'insertion (8) au niveau de son extrémité libre.

5. Assemblage de raccord tubulaire selon l'une quelconque des revendications 1 à 4, **caractérisé en ce que**
l'ouverture de verrouillage (63) respective est formée en tant que percement du manchon d'accouplement (2, 3, 4).

6. Assemblage de raccord tubulaire selon l'une quelconque des revendications 1 à 4, **caractérisé en ce que**
l'ouverture de verrouillage (63') respective est formée en tant que renflement du manchon d'accouplement (2, 3, 4).

7. Assemblage de raccord tubulaire selon l'une quelconque des revendications 1 à 6, **caractérisé en ce que**
l'élément de raccord tubulaire (1) a une forme en T avec trois manchons d'accouplement (2, 3, 4).

8. Assemblage de raccord tubulaire selon l'une quelconque des revendications 1 à 7, **caractérisé en ce que**
les manchons d'accouplement (2, 3, 4) ont la même forme.

9. Assemblage de raccord tubulaire selon l'une quelconque des revendications 1 à 8 et en particulier selon la revendication 7, **caractérisé en ce que**
lors de l'utilisation de plusieurs pièces d'adaptateur (15, 16, 56), leurs extrémités de pointe (19, 20, 57) ont la même forme.

10. Assemblage de raccord tubulaire selon l'une quelconque des revendications 1 à 9, **caractérisé en ce que**
les manchons (21, 22, 59) des pièces d'adaptateur (15, 16, 56) sont agencés de façon excentrée par rapport aux extrémités de pointe (19, 20, 57) respectives.

11. Assemblage de raccord tubulaire selon l'une quelconque des revendications 1 à 10, **caractérisé en ce que**
- rapportées à l'extrémité libre (25) de l'extrémité de pointe (19, 20, 57) respective d'une pièce d'adaptateur (15, 16, 56) - les broches de verrouillage (62) sont agencées derrière les dispositifs de maintien d'au moins un joint d'étanchéité (42, 43).
